(19) **Europäisches Patentamt European Patent Office Office européen des brevets**

(11) **EP 1 462 565 B1**

(12) **EUROPEAN PATENT SPECIFICATION**

(45) Date of publication and mention of the grant of the patent:
**20.02.2008 Bulletin 2008/08**

(51) Int Cl.:
**D21C 11/00** (2006.01)    **C05F 7/02** (2006.01)

(21) Application number: **04005657.4**

(22) Date of filing: **10.03.2004**

(54) **Plant nutrition solution formulated by recovery filtrate from plant fiber biopulp and method thereof**

Pflanzennährlösung aus einem wiedergewonnenem Filtrat aus Pflanzenfaser-Biopulp sowie Herstellungsverfahren

Solution nutritive pour plante obtenu à partir d'un filtrat de biopâte et procédé de préparation

(84) Designated Contracting States:
**AT BE BG CH CY CZ DE DK EE ES FI FR GB GR HU IE IT LI LU MC NL PL PT RO SE SI SK TR**

(30) Priority: **26.03.2003 CN 03108836**

(43) Date of publication of application:
**29.09.2004 Bulletin 2004/40**

(73) Proprietor: **Yuen Foong Yu Paper MFG Company, Limited**
**Taipei,**
**Taiwan 411 (TW)**

(72) Inventors:
• **Huang, Jenn-Wen**
**Taiping City**
**Taichung**
**Taiwan 411 (CN)**
• **Peng, Yu-Hsiang**
**Linkou Shiang**
**Taipei**
**Taiwan 244 (CN)**

(74) Representative: **Reinhard - Skuhra - Weise & Partner**
**Postfach 44 01 51**
**80750 München (DE)**

(56) References cited:
**EP-A- 1 088 937          WO-A- 01/65003**
**US-A- 5 958 104          US-A1- 2002 069 987**
**US-B1- 6 168 642          US-B2- 6 503 369**

• **DATABASE PAPERCHEM [Online] THE INSTITUTE OF PAPER SCIENCE AND TECHNOLOGY, ATLANTA, GA, US; DATABASE ACCESSION NUMBER AB4409698, 1973, KONIGSBRUNN, H: "PAPER MILL EFFLUENTS - FERTILIZER" XP002288531 retrieved from DIA & OESTERR. PAPIER 10, NO. 5: 33 [GER.], May 1973 (1973-05),**

EP 1 462 565 B1

**Description**

The present invention relates to a plant nutrition solution, and more particularly to a plant nutrition solution formulated by recovery filtrate from non-woody fiber biopulp and formulating method thereof.

Traditionally, farmers apply agricultural chemicals to prevent crops from being infected by the pathogens, which will increase the yield of the crops and reduce the possibility of plant disease infection. When the agricultural chemicals are utilized in a high concentration or in the late harvest period, the residue of agricultural chemicals left on the crops will be resulted in. An acute poison will cause damage on the human health by accumulating high concentration of the agricultural chemical in the body.

The present invention uses the recovery filtrate from non-woody fiber plant biopulp to formulate a plant nutrition solution for the crop cultivation. The rice straws, sugarcane residues and woods have been used as the materials for producing the paper pulp by chemical methods in the past. The waste water discharged from the papermaking factories is the major pollution source of the papermaking industry. This is a troublesome problem that is unable to be solved all the time. The present invention uses a biopulping method to produce the pulp fiber for papermaking. The recovery filtrate from the biopulp is not harmful to the germinations of the crop seeds and can be formulated to a plant nutrition solution. This plant nutrition is contributive to the crop development. Therefore, the present invention not only solves the environmental pollution problem but also provides a way for the resources recycling. This is a great achievement and breakthrough for the traditional chemical pulping processes.

In US Patent No. 5,958,104 entitled "Methods and Compositions for enhancing plant growth", a plant regulation solution is disclosed wherein the alkyl glucoside compounds are used to formulate the plant regulation solution for enhancing plant growth. The agronomically suitable additives, adjuvants, or other ingredients and components, for example, the Hoagland's solution or alcohol could be added in the plant regulation solution. In European Patent No. 1008937 entitled "Process for preparing high quality paper from vegetable residuals", a liquid fertilizer prepared from a biopulp filtrate of the vegetable residuals is disclosed wherein the biopulp is provided by fermenting the pre-humidified vegetable residuals with the aid of natural microorganisms.

The yield of rice straws is about 2.35 million tons every year in Taiwan. The organic components in rice straws are almost more than 95%. The organic components include 41.3 % carbon, 0.81 % nitrogen, 20.6 % semicellulose, 24.7 % cellulose and 7.7 % lignin. Generally, the ways for handling the waste rice straws include manufacturing them into straw ropes, straw bags, straw mats and cardboards, serving them as covering material for a plot of land, using them as a fuel, and mixing them with other materials to produce compost. Also, the rice straws could be directly buried in soil or burned for recyclably using the nutrition. Most of the waste rice straws are locally burned or directly buried in soil in modem society since the cost for manufacturing the rice straws into bags or mats is pretty high. When the waste rice straws are locally burned by the farmers, it not only easily results in the environmental pollution but also wastes the useful resources. Since the rice straws include abundant fibers, the soil fertility can be largely improved if the waste rice straws are buried in soil. However, the waste rice straws are usually not completely decomposed by the microorganisms under anaerobic environment, which results in the generation of organic acids such as acetic acid and phenolic acid, and etc. Nevertheless, these matters are harmful to the crop growth. The present invention provides a method that the waste rice straws are inoculated with the microorganisms under aerobic condition for fermentation and producing the biopulp and then the recovery biopulp filtrate is processed and manufactured into the product helpful to the crop development. In such a way, the waste would not cause environmental pollution.

Another aspect, character and executive adduction of the present invention will become more completely comprehensible by the following revelation and accompanying claim.

It is therefore an object of the present invention to provide a plant nutrition solution and formulating method thereof, and more particularly, a plant nutrition formulated by recovery filtrate from non-woody fiber plant biopulp and the formulating method thereof. The plant nutrition solution is helpful to the germination and enhances the growth of the plants.

It is an object of the present invention to provide a plant nutrition solution and method thereof. The present invention not only solves the environmental pollution problem but also provides a way for the resources recycling. This is a great achievement and breakthrough for the traditional chemical pulping processes.

In accordance with an aspect of the present invention, a method for formulating a plant nutrition solution is provided. The method includes steps of providing a biopulp of a non-woody fiber plant, filtrating the biopulp for preparing a filtrate and formulating the filtrate for preparing the plant nutrition solution.

The biopulp is provided by steps of providing a culture solution with a culture medium, a non-woody fiber plant and a suspension of a microorganism, and fermenting the culture solution for preparing the biopulp.

Preferably, the non-woody fiber plant is pretreated by one selected from a group consisting of a relatively higher pressure treatment under a relatively higher temperature, a steamed treatment under a relatively higher temperature, a boiled treatment under a relatively higher temperature, a fumigated treatment and a soaked treatment under a room temperature.

The microorganism is one selected from a group consisting of a *Bacillus licheniformis* (PMBP-m5), a *Bacillus subtilis* (PMBP-m6) and a *Bacillus amyloliquefaciens* (PMBP-m7).

Preferably, the microorganism has an inoculation concentration ranged from 0 to $10^8$ cfu / ml.

Preferably, the fermenting process is proceeded at a temperature ranged from 20 to 50 °C.

Preferably, the fermenting process is proceeded over 0~10 days.

Preferably, the step of fermenting the culture solution for preparing the biopulp further includes a step of boiling the biopulp for 25~40 minutes under 120~150°C.

Preferably, the biopulp further includes 0 ~ 4 % (w/v) CaO when being boiled.

Preferably, the biopulp is screened by 18~300 meshes.

Preferably, the filtrate is diluted by a volume of 10~100 times for being applied to a crop cultivation.

Preferably, the method further includes a step of adding an additive for preparing an improved plant nutrition, wherein the additive is one selected from a group consisting of a seaweed powder, an urea, an alcohol, a Hoagland's solution and a mixture thereof.

Preferably, the improved plant nutrition is diluted by a volume of 250~1000 times for being applied to a crop cultivation.

In accordance with another aspect of the present invention, a method for formulating a plant nutrition is provided. The method includes steps of providing a biopulp of a fiber plant, filtrating the biopulp for preparing a filtrate and formulating the filtrate for preparing the plant nutrition solution.

The biopulp is provided by steps of providing a culture solution with a culture medium, a fiber plant and a suspension of a microorganism, and fermenting the culture solution for preparing the biopulp.

The fiber plant is a non-woody fiber plant.

In accordance with another aspect of the present invention a formulated plant nutrition solution is provided. The plant nutrition includes a filtrate of a biopulp of a non-woody fiber plant, a nitrogen source, an alcohol and a Hoagland's solution.

Preferably, the plant nutrition solution further includes a polymer.

Preferably, the polymer is one selected from a group consisting of a seaweed powder, an alginic acid, an alginic salt, a polyelectrolyte, a corn wheat bran and a starch.

When the filtrate is 100 parts by volume, the polymer is added thereinto by a volume of 0.1~5 parts, the nitrogen source is added thereinto by a volume of 0.01~1 parts, the alcohol is added thereinto by a volume of 0.1~5 parts and the Hoagland's solution is added thereinto by a volume of 0.1~5 parts.

Preferably, the nitrogen source is a urea.

The above objects and advantages of the present invention will become more readily apparent to those ordinarily skilled in the art after reviewing the following detailed descriptions and accompanying drawings, in which:

Fig. 1 shows the ability of various strains to decompose the rice straw of Japonica rice;

Fig. 2 shows the effects of the biopulp filtrates at 50-fold dilution on the germination of lettuce seeds according to a preferred embodiment of the present invention;

Fig. 3 shows the effects of the biopulp filtrates at 50-fold dilution on the growth of lettuce according to a preferred embodiment of the present invention;

Fig. 4 shows the effects of the biopulp filtrates at 50-fold dilution on the growth of lettuce according to a preferred embodiment of the present invention;

Fig. 5 shows the effects of the biobulp filtrates of different dilution folds on the growth of cucumber seedlings according to a preferred embodiment of the present invention;

Fig. 6 shows the effects of different RSL plant nutrition concentrations on the growth of cucumber seedlings according to a preferred embodiment of the present invention; and

Fig. 7 shows the information about the growth of cucumber seedlings after being treated with RSL plant nutrition three times according to a preferred embodiment of the present invention.

The present invention will now be described more specifically with reference to the following embodiments. The present invention is to provide a plant nutrition formulated from the recovery filtrate of the biopulp of the waste rice straws. The material is waste rice straw. The detail steps are as follows.

(A) The preparation of waste rice straws for testing:

The waste rice straws of an Indica rice (*Oryza sativa* L. subsp. indica) and Japonica rice are provided. The variety of the Indica rice is Taichung Sheng No. 10 and that of the Japonica rice is Tai Keng No. 9. The rice straws are sun-dried, cut into small segments of 2-3 cm length and pretreated in different ways. The detail steps are described as follows. The waste rice straws are pretreated by an autoclaved treatment (121°C, 15 lb/in$^2$ for 15 minutes), a steamed treatment under relatively high temperature (100°C for 60 minutes), a boiled treatment under a relatively high temperature (100°C for 30 minutes), or a soaked treatment under room temperature (25~30°C for 30 minutes) respectively.

(B) The selection of bacterial strains having decomposition ability:

The microorganism strains are obtained by the following method according to a preferred embodiment. First, 10 g of the rice straws and 10 g of livestock excrements are prepared and added into 90 ml of sterile water containing agar (0.1 %, w/v). The materials are well mixed and a serious dilution is made. Then, 0.1 ml of $10^3$ X and $10^4$ X diluted solution are uniformly spread on Nutrient Agar plate, pH 8 (NA, purchased Nutrient Agar from Difco company) and Potato Dextrose Agar plate, pH 8 (PDA, purchased Potato Dextrose Agar from Difco company) respectively. Next, the plates are placed in the incubators under 30 °C and 50 °C for 24 hours and 48 hours respectively. Single colonies grown on plates are picked and isolated for obtaining the microorganism strains. The number of microorganisms isolated from the rice straws and the livestock excrements having the decomposition ability is more than 200 strains. Finally, the microorganisms are identified by the Gram stain. It is found that most of the microorganisms are Gram-positive bacteria.

The isolated microorganisms are further selected by the following steps for selecting the microorganism strains having the decomposition ability for rice straws. (1) 19 strains of the isolated strains, named PMBP-m1, PMBP-m2, PMBP-m3, PMBP-m4, PMBP-m5, PMBP-m6, PMBP-m7, PMBP-O1, PMBP-O2, PMBP-O3, PMBP-O4, PMBP-e1, PMBP-e2, PMBP-e3, PMBP-e4, PMBP-H1, PMBP-H2, PMBP-H3 and PMBP-H4 (as shown in Table 1), are divided into 9 strains groups, including PMBP-I, PMBP-II, PMBP-III, PMBP-IV, PMBP-V, PMBP-VI, PMBP-O, PMBP-E and PMBP-H. Please refer to Table 1, which shows the bacterial strains of different strain groups and the characteristics thereof. (2) The strains groups are cultured with NA plates respectively and then a suspension of microorganism is prepared at the concentration of $10^8$ cfu/ml. (3) 100 ml of solution containing rice straws of Japonica rice (5%, w/v) is prepared. (4) 1 ml of the microorganism suspension is added into the sterile solution prepared in step (3) and then cultured under 50 °C and 200 rpm shaking for a week. Each strain is set up in duplicate. (5) The decomposition percentage of rice straws is calculated.

Table 1

| Characteristics / Isolate | Temp. 50 $^0$C | pH8 | Gram stain (+/-) |
|---|---|---|---|
| PMBP-m1 | ++ | + | + |
| PMBP-m2 | ++ | + | + |
| PMBP-m3 | ++ | + | + |

| | | | |
|---|---|---|---|
| PMBP-m4 | ++ | + | + |
| PMBP-m5 | ++ | + | + |
| PMBP-m6 | ++ | + | + |
| PMBP-m7 | ++ | + | + |
| PMBP-O1 | ++ | + | + |
| PMBP-O2 | ++ | + | + |
| PMBP-O3 | ++ | + | + |
| PMBP-O4 | ++ | + | + |
| PMBP-e1 | ++ | + | + |
| PMBP-e2 | ++ | + | + |
| PMBP-e3 | ++ | + | + |
| PMBP-e4 | ++ | + | + |
| PMBP-H1 | ++ | + | + |
| PMBP-H2 | ++ | + | + |
| PMBP-H3 | ++ | + | + |
| PMBP-H4 | ++ | + | + |

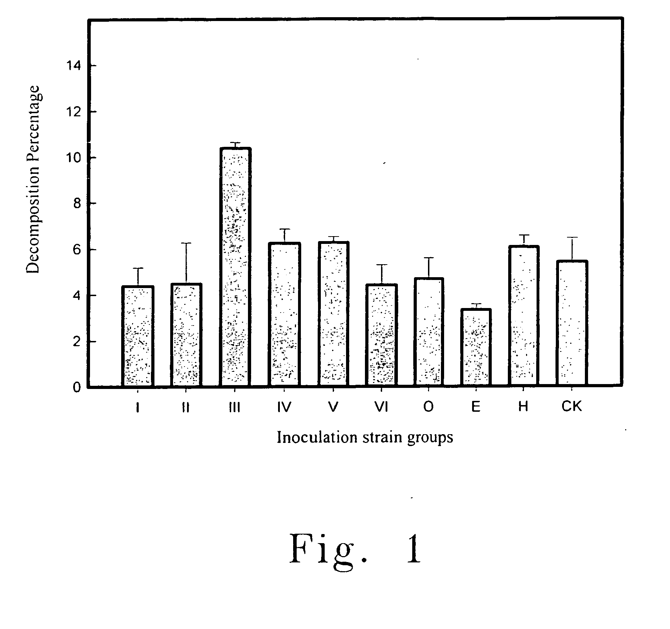

Please refer to Fig. 1, which shows the ability of various strains to decompose the rice straw of Japonica Rice. The Japonica rice straws treated with shaking culturing for a week are classified, dried and weighted. The decomposition percentage of rice straws treated with different microorganisms is calculated by the following formula.

$$\text{Decomposition \%} = \frac{(\text{Total dry weight of fermentative rice straws} - \text{Dry weight of intact rice straws})}{(\text{Total dry weight of fermentative rice straws})} \times 100$$

As shown in Fig. 1, the PMBIII strain group has the best decomposition ability than the others. The decomposition percentage of rice straws is about 10.38 %. The PMBIII consists of *Bacillus licheniformis* (PMBP-m5), *B. subtilis* (PMBP-m6) and *B. amyloloquefaciens* (PMBP-m7).

(C) The preparation of culture solution:

A LBY (Lactose Beef extract Yeast extract, LBY) culture medium containing 0.25 % (w/v) lactose, 0.2 % (w/v) beef extract and 0.05 % (w/v) Yeast extract is prepared. The pretreated waste rice straws are added into the LBY culture solution by a ratio of 5 % (w/v) respectively. The microorganism suspensions of the PMBPIII strain group are added into the LBY medium at the concentration of $1 \times 10^6$ cfu/ml. And then, the culture solutions are prepared. The PMBPIII strain group consists of *Bacillus licheniformis* (PMBP-m5), *B. subtilis* (PMBP-m6) and *B. amyloloquefaciens* (PMBP-m7) isolated from the waste rice straws or livestock excrements and are Gram-positive bacteria.

(D) Fermentation culturing under continuously shaking:

The culture solutions are incubated at 50 °C and shaked at 200 rpm for a week. And then a biopulp of the waste rice straws are prepared. Each treatment has duplicate treatment.

(E) Filtrating the biopulp of the waste rice straws:

The biopulp of each treatment is screened by a sieve with 270 meshes for preparing a filtrate. The lower part of the filtrate is used for preparing the pulp fiber for papermaking. The upper part of the filtrate is recovered to formulate the plant nutrition.

(F) The dilution of the filtrate for formulating a plant nutrition solution:

The recovery filtrate is diluted with sterile water by a volume of 50 times for preparing a plant nutrition solution.

(G) The application of the plant nutrition solution to the crop cultivation:

The lettuce seeds are immersed in the plant nutrition solution for 2 days and then planted in 5-inch-diameter pots. And then each time 100 ml of plant nutrition solution is applied to each treatment per week respectively. The effects of the plant nutrition of each treatment on the growth of the lettuce seedlings are examined after four weeks.

Additionally, serial dilutions of 10, 25, 50 and 100 times of the recovery filtrates are prepared. The diluted filtrates are applied to the germinated cucumber seeds one time per week for three times. The growths of the cucumber seedlings are examined after 21 days.

(H) The improvement of the plant nutrition solution:

0.3 % (w/v) seaweed powder (a kind of polymer), 0.1 % (w/v) urea, 1 % (v/v) alcohol, and 2 % (v/v) Hoagland's solution (The Hoagland's solution contains 0.6 g copper sulfate, 0.11 g ferric sulfate, 0.79 g manganese chloride and 0.15 g zinc sulfate per liter.) are added into the foregoing recovery filtrate of waste rice straw for formulating the RSL plant nutrition solution. The seaweed powder is a kind of polymer. The other kinds of polymer can be used, for example, alginic acid, an alginic salt and polyelectrolytes, etc. Also, the corn wheat bran or starch can be used to replace the polymer.

(I) The application of the RSL plant nutrition solution to the crop cultivation:

Serial dilutions of 250, 500, 750 and 1000 times of the RSL plant nutrition solution are prepared. The diluted RSL plant nutrition solution are applied to the germinated cucumber seeds one time per week for three times. The growths of the cucumber seedlings are examined after 21 days.

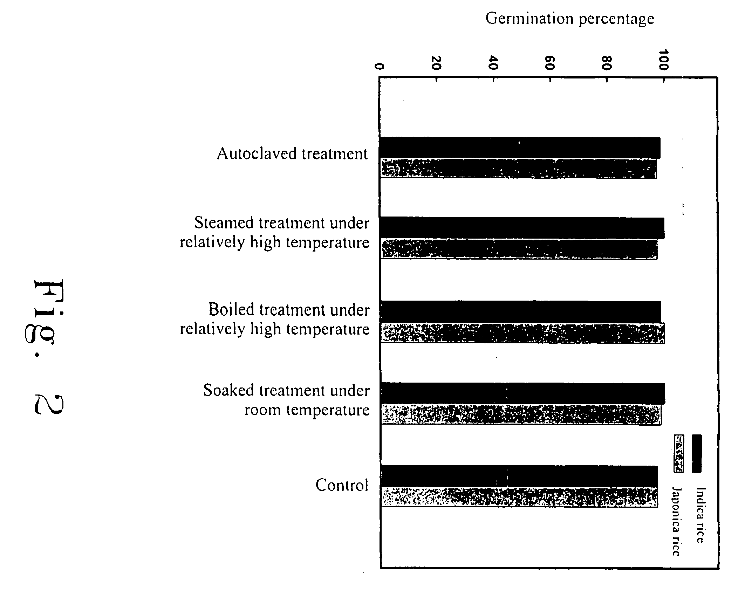

The effects of the plant nutrition solutions formulated from different treatments of waste rice straws on the plant growths are described as follows. Please refer to Fig. 2, which shows the effects of the biopulp filtrates at 50-fold dilution on the germination of lettuce seeds according to a preferred embodiment of the present invention. The germination percentages of different treatments are between 97 % and 100 %. The germinations of the lettuce seeds are not inhibited or harmed by the plant nutrition solutions. The roots of the lettuce seedlings are not unusual and the root hairs grow vigorously.

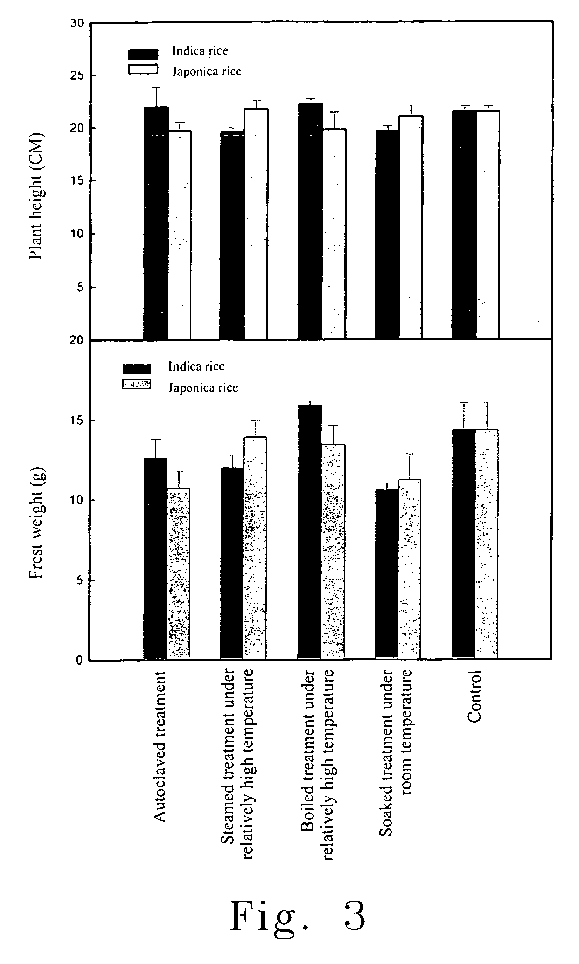

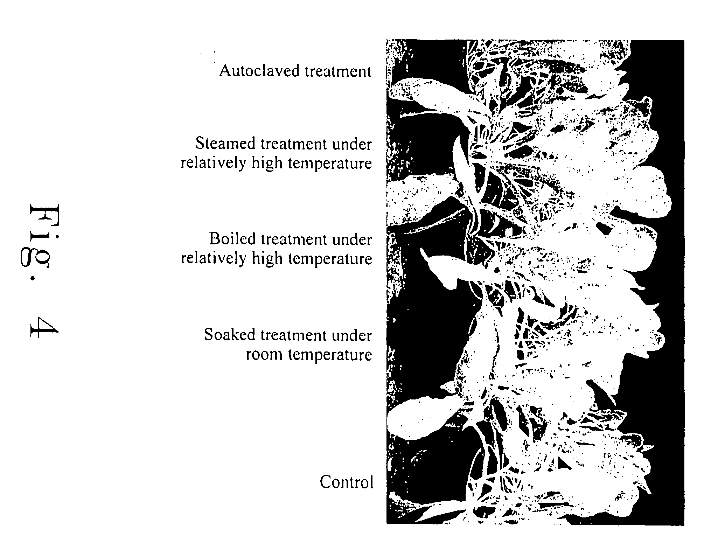

Please refer to Fig. 3, which shows the effects of the biopulp filtrates at 50-fold dilution on the growth of lettuce according to a preferred embodiment of the present invention. The filtrates of different pretreated waste rice straws do not affect the plant heights and fresh weights of lettuce seedlings. The filtrate obtained from the waste rice straws treated by boiled treatment has the effect of enhancing the growths of lettuce seedlings, especially, the filtrate obtained from the Indica rice (Fig. 4).

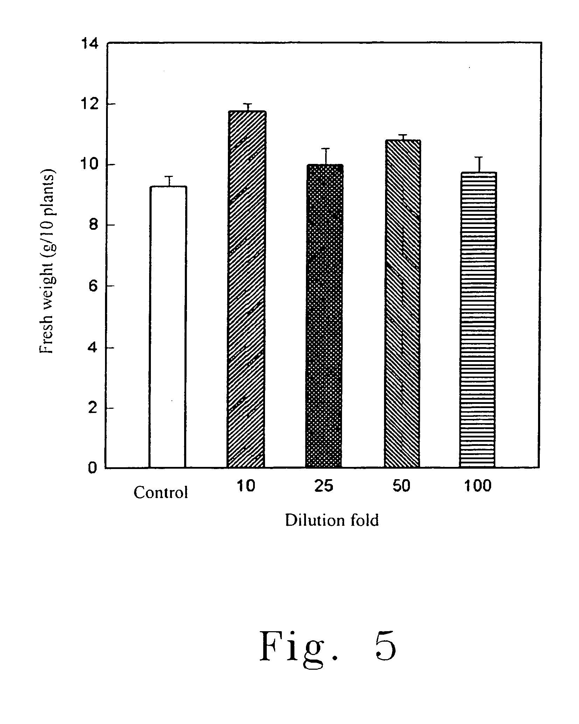

The PMBPIII strain group consists of *Bacillus licheniformis* (PMBP-m5), *B. subtilis* (PMBP-m6) and *B. amyloloquefaciens* (PMBP-m7) are inoculated into the LBY culture medium containing 5 % (w/v) waste rice straws. The waste rice straws of an Indica rice (*Oryza sativa* L. subsp. indica) are provided. The variety of the Indica rice is Taichung Sheng No. 10. The rice straws are sun-dried, cut into small segments of 2-3 cm length. The inoculation concentration of the PMBPIII strain group is $1 \times 10^6$ cfu/ml. The culture solutions are incubated and fermented at 50 °C and shaked at 200 rpm for four days. And then, 1 % (w/v) CaO is added into the solution. The solution is heated up to 140 °C for 30 minutes for preparing a biopulp solution. The biopulp solution is screened by a sieve with 270 meshes for preparing a biopulp filtrate. The biopulp filtrate is diluted with sterile water for serial dilutions of 10, 25, 50 and 100 times. The diluted filtrates are applied to the germinated cucumber seeds one time per week for three times. The growths of the cucumber seedlings are examined after 21 days. The growths of the lettuce seedlings are not inhibited or harmed by the plant nutrition solutions. The plant nutrition solutions have somewhat effects on enhancing the seedling developments and mitigating the disease of powdery mildew. Please refer to Fig. 5, which shows the effects of the biobulp filtrates of different dilution folds on the growths of cucumber seedlings according to a preferred embodiment of the present invention. The fresh weights of the cucumber seedlings treated with the plant nutrition solutions formulated from the biopulp filtrate are better than that of the control. The roots grow well. And the plant nutrition treatment can help the plants to stand erectly.

According to another preferred embodiment, the filtrate produced by the biopulp of waste rice straws can be improved by adding some additives. Four additives including 0.3 % (w/v) seaweed powder, 0.1 % (w/v) urea, 1 % (v/v) alcohol and 2 % (v/v) Hoagland's solution are added into the recovery filtrate of the biopulp of waste rice straws for formulating a RSL plant nutrition solution. The Hoagland's solution contains 0.6 g copper sulfate, 0.11 g ferric sulfate, 0.79 g manganese chloride and 0.15 g zinc sulfate per liter. The RSL plant nutrition is diluted with the sterile water for making serial dilutions of 250, 500, 750 and 1000 times. The different diluted plant nutrition solutions are respectively applied to the germinated cucumber seeds one time per week. The growths of cucumber seedlings are examined after 21 days.

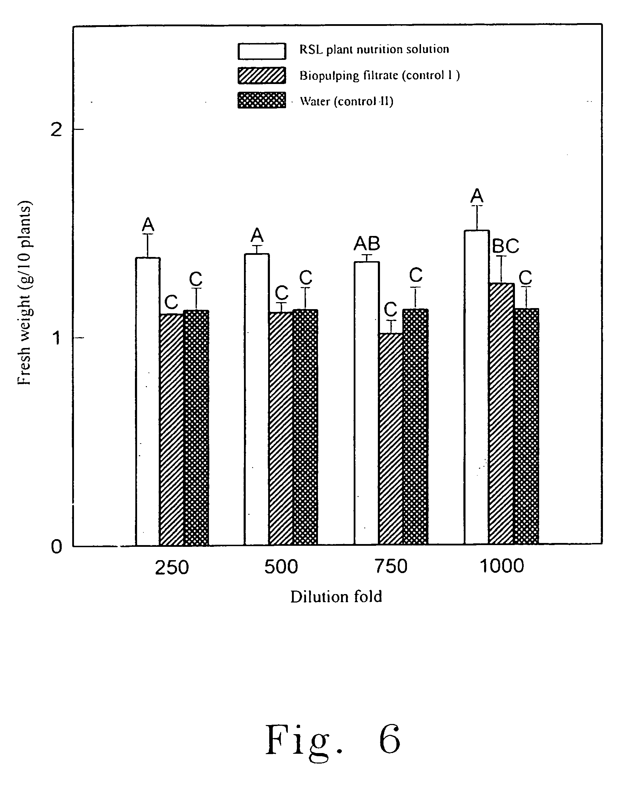

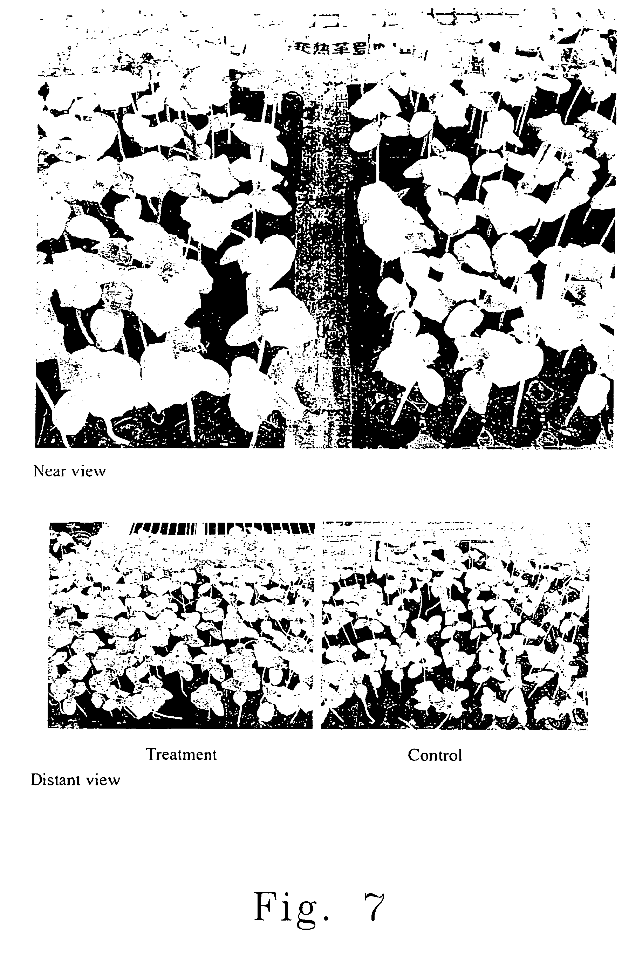

Please refer to Fig. 6 and Fig. 7. Fig. 6 shows the effects of different RSL plant nutrition concentrations on the growth of cucumber seedlings according to a preferred embodiment of the present invention. The results reveal that the growths of cucumber seedlings are enhanced by the RSL plant nutrition solutions. The effects on the growths of cucumber seedlings of RSL plant nutrition solutions are better than those of the control I (plant nutrition directly formulated from the biopulp filtrate) and the control II (water treatment). Fig. 7 shows the information about the growth of cucumber seedlings after being treated with RSL plant nutrition three times according to a preferred embodiment of the present invention. The fresh weights of the cucumber seedlings are better than the other treatments. The whole plants and leaves are taller and larger and the disease of powdery mildew is mitigated for the cucumber.

The bacterial strains described in the present application were deposited with ATCC and have received the following ATCC accession numbers:

*Bacillus licheniformis (PMBP-M5)*
ATCC Number: PTA-5824
Date of Deposit: February 18, 2004

*Bacillus subtilis (PMBP-M6)*
ATCC Number: PTA-5818
Date of Deposit: February 13, 2004

*Bacillus amyloliquefaciens (PMBP-M7)*
ATCC Number: PTA-5819
Date of Deposit: February 13, 2004

**Claims**

1.  A method for formulating a plant nutrition solution, **characterized in that**:

    (a) providing a biopulp of a non-woody fiber plant, wherein the biopulp is provided by steps of:

        (a1) providing a culture solution with a culture medium, the non-woody fiber plant and a suspension of a microorganism, wherein the microorganism is one selected from a group consisting of *Bacillus licheniformis* (PMBP-m5), *Bacillus subtilis* (PMBP-m6) and *Bacillus amyloliquefaciens* (PMBP-m7); and
        (a2) fermenting the culture solution for preparing the biopulp;

    (b) filtrating the biopulp for preparing a filtrate; and
    (c) formulating the filtrate for preparing the plant nutrition solution.

2.  The method as claimed in claim 1, **characterized in that** the non-woody fiber plant is pretreated by one selected from a group consisting of a relatively higher pressure treatment under a relatively higher temperature, a steamed treatment under a relatively higher temperature, a boiled treatment under a relatively higher temperature, a fumigated treatment and a soaked treatment under a room temperature.

3.  The method as claimed in claim 1 or 2, **characterized in that** the microorganism has an inoculation concentration ranged from 0 to $10^8$ cfu / ml.

4.  The method as claimed in one of the preceding claims, **characterized in that** the fermenting process is proceeded at a temperature ranged from 20 to 50 °C.

5. The method as claim in one of the preceding claims, **characterized in that** the fermenting process is proceeded over 0~10 days.

6. The method as claimed in one of the preceding claims, **characterized in that** the step (b) further comprises a step of boiling the biopulp for 25~40 minutes under 120~150°C.

7. The method as claimed in one of the preceding claims, **characterized in that** the biopulp further comprises 0 ~ 4 % (w/v) CaO when being boiled.

8. The method as claim in one of the preceding claims, **characterized in that** the biopulp is screened by 18~300 meshes.

9. The method as claimed in one of the preceding claims, **characterized in that** the filtrate is diluted by a volume of 10~100 times for being applied to a crop cultivation.

10. The method as claimed in claim 1 **characterized by** comprising a step of adding an additive for preparing an improved plant nutrition solution, **characterized in that** the additive is one selected from a group consisting of a seaweed powder, an urea, an alcohol, a Hoagland is solution and a mixture thereof.

11. The method as claimed in one of the preceding claims, **characterized in that** the improved plant nutrition solution is diluted by a volume of 250~1000 times for being applied to a crop cultivation.

12. A formulated plant nutrition solution, comprising:

   a filtrate of a biopulp of a non-woody fiber plant, wherein the biopulp is provided by steps of:

   (a) providing a culture solution with a culture medium, the non-woody fiber plant and a suspension of a microorganism, wherein the microorganism is one selected from a group consisting of Bacillus licheniformis (PMBP-m5), Bacillus subtilis (PMBP-m6) and Bacillus amyloliquefaciens (PMBP-m7); and
   (b) fermenting the culture solution for preparing the biopulp;

   a nitrogen source;
   a polymer ;
   an alcohol; and
   a Hoagland's solution,

   wherein, when the filtrate is 100 parts by volume, the nitrogen source is added thereinto by a volume of 0.01~1 parts, the polymer is added by a volume of 0.1~5 parts, the alcohol is added thereinto by a volume of 0.1~5 parts and the Hoagland's solution is added thereinto by a volume of 0.1~5 parts.

13. The formulated plant nutrition solution as claimed in claim 12, **characterized in that** the polymer is one selected from a group consisting of a seaweed powder, an alginic acid, an alginic salt, a polyelectrolyte, a corn wheat bran and a starch.

14. The formulated plant nutrition solution as claimed in claim 12 or 13, **characterized in that** the nitrogen source is a urea.

**Patentansprüche**

1. Verfahren zum Formulieren einer Pflanzennährlösung, **gekennzeichnet durch**:

   (a) Bereitstellen einer Biopulpe einer nicht-holzigen Faserpflanze, wobei die Biopulpe mit den Schritten hergestellt wird:

   (a1) Bereitstellen einer Kulturlösung mit einem Kulturmedium, der nicht-holzigen Faserpflanze und einer Suspension eines Mikroorganismus, wobei der Mikroorganismus einer ist, der ausgewählt ist aus einer Gruppe, bestehend aus *Bacillus licheniformis* (PMBP-m5), *Bacillus subtilis* (PMBP-m6) und *Bacillus amy-*

*loliquefaciens* (PMBP-m7); und

(a2) Fermentieren der Kulturlösung zum Herstellen der Biopulpe;

(b) Filtrieren der Biopulpe zum Herstellen eines Filtrats; und

(c) Formulieren des Filtrats zum Herstellen der Pflanzennährlösung.

2. Verfahren nach Anspruch 1, **dadurch gekennzeichnet, dass** die nicht-holzige Faserpflanze mit einer Behandlung vorbehandelt wird, die ausgewählt ist aus der Gruppe, bestehend aus einer Behandlung mit einem relativ höheren Druck bei einer relativ höheren Temperatur, einer Dampfbehandlung bei einer relativ höheren Temperatur, einer Kochbehandlung bei einer relativ höheren Temperatur, einer Desinfektionsbehandlung und einer Eintauchbehandlung bei Raumtemperatur.

3. Verfahren nach Anspruch 1 oder 2, **dadurch gekennzeichnet, dass** der Mikroorganismen eine Animpfkonzentration zwischen 0 und $10^8$ cfu/ml aufweist.

4. Verfahren nach einem der vorhergehenden Ansprüche, **dadurch gekennzeichnet, dass** der Fermentierungsprozess bei einer Temperatur zwischen 20 und 50 °C abläuft.

5. Verfahren nach einem der vorhergehenden Ansprüche, **dadurch gekennzeichnet, dass** der Fermentierungsprozess 0 bis 10 Tage andauert.

6. Verfahren nach einem der vorhergehenden Ansprüche, **dadurch gekennzeichnet, dass** der Schritt (b) ferner einen Schritt des Kochens der Biopulpe für 25 bis 40 Minuten bei 120 bis 150 °C umfasst.

7. Verfahren nach einem der vorhergehenden Ansprüche, **dadurch gekennzeichnet, dass** die Biopulpe ferner 0 bis 4 % (w/v) CaO umfasst, wenn sie gekocht wird.

8. Verfahren nach einem der vorhergehenden Ansprüche, **dadurch gekennzeichnet, dass** die Biopulpe durch eine Maschenweite von 18 bis 300 gesiebt wird.

9. Verfahren nach einem der vorhergehenden Ansprüche, **dadurch gekennzeichnet, dass** das Filtrat mit einem 10- bis 100-fachen Volumen verdünnt wird, um auf eine Kulturpflanzenkultivierung aufgebracht zu werden.

10. Verfahren nach Anspruch 1, **dadurch gekennzeichnet, dass** es einen Schritt des Zugebens eines Zusatzstoffs zum Herstellen einer verbesserten Pflanzennährlösung umfasst, **dadurch gekennzeichnet, dass** der Zusatzstoff einer ist, der ausgewählt ist aus einer Gruppe, bestehend aus einem Seealgenpulver, einem Harnstoff, einem Alkohol, einer Hoagland-Lösung und einer Mischung davon.

11. Verfahren nach einem der vorhergehenden Ansprüche, **dadurch gekennzeichnet, dass** die verbesserte Pflanzennährlösung mit einem 250- bis 1000-fachen Volumen verdünnt wird, um auf eine Kulturpflanzenkultivierung aufgebracht zu werden.

12. Formulierte Pflanzennährlösung, umfassend:

ein Filtrat einer Biopulpe einer nicht-holzigen Faserpflanze, wobei die Biopulpe mit den Schritten hergestellt wird:

(a) Bereitstellen einer Kulturlösung mit einem Kulturmedium, der nicht-holzigen Faserpflanze und einer Suspension eines Mikroorganismus, wobei der Mikroorganismus einer ist, der ausgewählt ist aus einer Gruppe, bestehend aus *Bacillus licheniformis* (PMBP-m5), *Bacillus subtilis* (PMBP-m6) und *Bacillus amyloliquefaciens* (PMBP-m7); und

(b) Fermentieren der Kulturlösung zum Herstellen der Biopulpe;

eine Stickstoffquelle;

ein Polymer;

einen Alkohol; und

eine Hoagland-Lösung,

wobei die Stickstoffquelle, wenn das Filtrat 100 Volumenteile ausmacht, mit einem Volumen von 0,01 bis 1 Teil(en) dazugegeben wird, das Polymer mit einem Volumen von 0,1 bis 5 Teilen dazugegeben wird, der Alkohol mit einem Volumen von 0,1 bis 5 Teilen dazugegeben wird und die Hoagland-Lösung mit einem Volumen von 0,1 bis 5 Teilen dazugegeben wird.

**13.** Formulierte Pflanzennährlösung nach Anspruch 12, **dadurch gekennzeichnet, dass** das Polymer eines ist, das ausgewählt ist aus einer Gruppe, bestehend aus einem Seealgenpulver, einer Alginsäure, einem Alginsalz, einem Polyelektrolyten, einer Kornweizenkleie und einer Stärke.

**14.** Formulierte Pflanzennährlösung nach Anspruch 12 oder 13, **dadurch gekennzeichnet, dass** die Stickstoffquelle ein Harnstoff ist.

**Revendications**

**1.** Procédé de formulation d'une solution nutritive pour plante, **caractérisé en ce que** :

(a) une biopulpe d'une plante à fibre non-ligneuse est fournie, la biopulpe étant fournie par les étapes consistant à :

(a1) fournir une solution de culture avec un milieu de culture, la plante à fibre non-ligneuse et une suspension de micro-organisme, dans laquelle le micro-organisme est choisi dans un groupe constitué par le *Bacillus licheniformis* (PMBP-m5), le *Bacillus subtilis* (PMBP-m6) et *le Bacillus amyloliquefaciens* (PMBP-m7) ; et
(a2) fermenter la solution de culture pour préparer la biopulpe ;

(b) la biopulpe est filtrée pour préparer un filtrat ; et
(c) le filtrat est formulé pour préparer la solution nutritive pour plante.

**2.** Procédé selon la revendication 1, **caractérisé en ce que** la plante à fibre non-ligneuse est prétraitée par l'intermédiaire d'un traitement choisi dans un groupe constitué par un traitement sous pression relativement élevée à une température relativement élevée, un traitement à la vapeur à une température relativement élevée, un traitement par ébullition à une température relativement élevée, un traitement par fumigation et un traitement par trempage à température ambiante.

**3.** Procédé selon la revendication 1 ou 2, **caractérisé en ce que** le micro-organisme possède une concentration d'inoculation dans la plage de 0 à $10^8$ cfu/ml.

**4.** Procédé selon l'une quelconque des revendications précédentes, **caractérisé en ce que** le procédé de fermentation est réalisé à une température de 20 à 50 °C.

**5.** Procédé selon l'une quelconque des revendications précédentes, **caractérisé en ce que** le procédé de fermentation est réalisé pendant 0 à 10 jours.

**6.** Procédé selon l'une quelconque des revendications précédentes, **caractérisé en ce que** l'étape (b) comprend en outre une étape consistant à faire bouillir la biopulpe pendant 25 à 40 minutes à une température de 120 à 150 °C.

**7.** Procédé selon l'une quelconque des revendications précédentes, **caractérisé en ce que** la biopulpe comprend en outre 0 à 4 % (poids/volume) de CaO quand elle est bouillie.

**8.** Procédé selon l'une quelconque des revendications précédentes, **caractérisé en ce que** la biopulpe est filtrée avec un tamis de 18 à 300 mesh.

**9.** Procédé selon l'une quelconque des revendications précédentes, **caractérisé en ce que** le filtrat est dilué 10 à 100 fois en volume pour être appliqué sur une culture vivrière.

**10.** Procédé selon la revendication 1, **caractérisé en ce qu'**il comprend une étape consistant à ajouter un additif pour préparer une solution nutritive pour plante améliorée, **caractérisé en ce que** l'additif est choisi dans un groupe constitué par une poudre d'algues, une urée, un alcool, une solution d'Hoagland et un mélange de ceux-ci.

**11.** Procédé selon l'une quelconque des revendications précédentes, **caractérisé en ce que** la solution nutritive pour plante améliorée est diluée 250 à 1000 fois en volume pour être appliquée sur une culture vivrière.

**12.** Solution nutritive pour plante formulée, comprenant :

un filtrat composé d'une biopulpe de plante à fibre non-ligneuse, la biopulpe étant fournie par les étapes consistant à :

(a) fournir une solution de culture avec un milieu de culture, la plante à fibre non-ligneuse et une suspension de micro-organisme, dans laquelle le micro-organisme est choisi dans un groupe constitué par le *Bacillus licheniformis* (PMBP-m5), le *Bacillus subtilis* (PMBP-m6) et *le Bacillus amyloliquefaciens* (PMBP-m7) ; et
(b) fermenter la solution de culture pour préparer la biopulpe ;

une source d'azote ;
une polyurée ;
un alcool ; et
une solution d'Hoagland,

dans laquelle, quand la quantité de filtrat est de 100 parties en volume, 0,01 à 1 partie en volume de la source d'azote y est ajoutée, 0,1 à 5 parties en volume de la polyurée y sont ajoutées, 0,1 à 5 parties en volume de l'alcool y sont ajoutées et 0,1 à 5 parties en volume de la solution d'Hoagland y sont ajoutées.

**13.** Solution nutritive pour plante formulée selon la revendication 12, **caractérisée en ce que** le polymère est choisi dans un groupe constitué par une poudre d'algues, un acide alginique, un sel alginique, un polyélectrolyte, un son de maïs et de blé et un amidon.

**14.** Solution nutritive pour plante formulée selon la revendication 12 ou 13, **caractérisée en ce que** la source d'azote est une urée.

Fig. 1

Fig. 2

Fig. 3

Autoclaved treatment

Steamed treatment under relatively high temperature

Boiled treatment under relatively high temperature

Soaked treatment under room temperature

Control

Fig. 4

Fig. 5

Fig. 6

Near view

Treatment          Control

Distant view

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5958104 A
- EP 1008937 A